# EUROPEAN PATENT SPECIFICATION

(11) **EP 3 592 659 B1**
(45) Date of publication and mention of the grant of the patent: **04.05.2022**
(21) Application number: 18763914.1
(22) Date of filing: 09.03.2018
(51) Int. Cl.: B65D 75/04, B32B 27/08, B65D 81/34, B65D 65/02, B65D 81/24

(54) **FOOD COVERING**
LEBENSMITTELABDECKUNG
REVÊTEMENT ALIMENTAIRE

(30) Priority: 09.03.2017 AU 2017900831
(43) Date of publication of application: 15.01.2020
(73) Proprietor: Scott, Melanie, Wesburn, Victoria 3799 (AU)
(72) Inventor: Scott, Melanie, Wesburn, Victoria 3799 (AU)
(74) Representative: Lock, Graham James
(86) International application number: PCT/AU2018/050219
(87) International publication number: WO 2018/161127

(56) References cited:
- TW-A- 200 722 013
- US-A1- 2006 045 949
- US-A1- 2006 045 949
- US-A1- 2011 097 555
- US-A1- 2011 097 555
- US-A1- 2014 110 292
- US-A1- 2014 110 292

## Description

### Field of invention

This invention relates to a film for covering food and, in particular, for providing a sealing wrapping around food or a container in which the food it held.

### Background to the invention

Long used as wrapping material for food preservation is aluminium foil sheeting. This suffers from opacity, preventing the food item to be displayed to potential retail customers once wrapped and is potentially toxic to human health and not-recyclable.

Self-adhering cling wrappings are well known as protective, relatively airtight wrappers for enclosing food items, especially (but not only) when ready to eat. These wrappers are conventionally made of films of long chain polymers, low density polyethylene and polyvinylchloride. A drawback of this kind of wrapping is that is does not withstand the heat involved in baking. It is also not fit for reuse, being generally discarded after a single use. It is not practical to wash and would in any event look unappealing, if not unsightly. Some versions are hydrophilic, adding to their general unsightliness when exposed to water. Although coverings of this kind are self-adhering, they require added adhesives to render them capable to adhering to other surfaces. They are not heat resistant to the degree of baking temperatures in the upper domestic range, generally in excess of 280K.

When it comes to cooking food, certain known baking papers and parchment papers tend to leach dioxin, a chemical compound that is created when the chlorine in the paper reacts when subjected to heat.

Silicone is a polymer that includes silicon, oxygen, hydrogen and carbon and is commonly produced as a liquid or a solid body. It is known for its non-stick properties, being commonly used as a lubricant. Silicone composites of various sheet thicknesses have been developed for food industry use, such as in baking mats, bowl covers and food 'keepers'. These are found to be too thick and non-adhesive to be suitable for establishing a sealing wrapper about food items. Inferior quality silicone sheets are not safe for high temperature, use, such as required for roasting or baking.

The present inventor has noticed a need for a wrap that is suitably flexible, yet hard, and which is of sufficient thickness for a user to be able not only to use it as a conventional sealing wrapping, but also to bake the contents while still wrapped and other baking applications. There is considered to be a need for a covering product that is re-usable, recyclable and able to replace, by performing the same function as at least three single use items that are commonly used, namely cling film, aluminium foil and baking paper.

US patent application publication number 2006/0045949 discloses various "devices" of silicone that may be used in the preparation of food. The devices include silicone cords, bindings, meshes and films, both contiguous and perforated, but there is nothing said about the importance of physical characteristics such as thickness in the successful functioning of the devices in question. However, the thermal inertness of silicone, relative to that of various polymer films is noted. There is no suggestion that there may be a film that has three-in-one functionality deriving from its thickness, namely a combination of re-usability, heat resistance and self-clinging properties. There is no disclosure of a film being sealingly wrapped around a food item. Silicone film is instead disclosed as a barrier layer to be placed between food and aluminium foil, to prevent leaching of contaminants from the foil during cooking or when exposed to acidic food components such as tomato. There is no suggestion that silicone be used alone as a covering.

US patent application publication number 2011/0097555 discloses manufacture of a food wrapping wherein a silicone gum mixture is subjected to silkscreening on a non-stick sheet such as polytetrafluoro-ethylene (PTFE), whereafter it is cured on the sheet. The cured silicone gum mixture forms a relatively thick silicone layer for foodstuffs of 0.3 to 1 mm and is sold either in a rolled form or as a flat sheet. It is said to be able to withstand temperatures in excess of 500°F - equal to 160°C - and even up to 500°C. This property is thought to be a function of the thickness of the sheet. A drawback is that this thickness is too great for ease of wrapping, leading to a propensity of the wrapping to unwrap after a while, reducing its effectiveness in providing a seal of freshness for the foodstuff that has been wrapped.

US patent application publication number 2014/0110292 discloses a food wrap formed in a laminate structure comprising a silicone film backed by a support layer of polyethylene terephthalate (PET). The structure is vulcanized to promote a crosslinking effect between the silicone and the support layer. The structure or the silicone layer alone has a thickness in the range 0.05mm to 5mm. This is an extremely wide range. The thickness of the support layer is not disclosed. The silicone is taught to have a heat resistance to only 230°C. Once the composite laminate is wrapped over a food container requiring wrapping, the support layer is said to be "torn" away, to leave the silicone layer in place over the container. A disadvantage of this structure is that because of the crosslinking, a certain degree of violence is required to tear away the PET support layer from the silicone film. This can result in the integrity of the silicone layer being compromised and the film even rupturing, depending on its thickness and the degree of crosslinking achieved. This requires the thickness of the silicone to be increased. This in turn leads to a reduction in clinginess or wrappability of the end product. This suggests that films towards the lower end of the quoted thickness range are not practical for wrapping.

Food wrappings sold under the brand name "Stretch & Fresh", although made of silicone, provide a degree of sealing, but are not suitable for wrapping or baking.

### Objects of the invention

It is an object of this invention to address the shortcomings of the prior art and, in doing so, to provide a multifunction homogeneous protective covering for items of food.

The object is also to provide a substantially airtight flexible and transparent protective wrapping for food items that alleviates at least some of the problems of prior wraps.

A further object of the invention is to provide method of reducing environmental damage resulting from the use of non-reusable wrappings.

The preceding discussion of the background to the invention is intended to facilitate an understanding of the present invention. However, it should be appreciated that the discussion is not an acknowledgement or admission that any of the material referred to was part of the common general knowledge in Australia or elsewhere as at the priority date of the present application.

Further, and unless the context clearly requires otherwise, throughout the description and the claims, the words 'comprise', 'comprising', and the like are to be construed in an inclusive sense - that is to say, in the sense of "including, but not being limited to" - as opposed to an exclusive or exhaustive sense - that is to say meaning "including this and nothing else".

### Summary of invention

According to a first aspect of the invention, there is provided a food covering comprising a silicone film of at least food grade, adapted for clinging to itself or to an item to be wrapped therein, and being substantially transparent and resistant to deterioration at food cooking temperatures. The film has a thickness in the range 0.15mm to 0.26mm, preferably 0.190mm to 0.21mm. Ideally, the thickness is 0.20mm =/-3%. In addition, the film has a hardness on the Shore scale in the range Shore A25-70.

The silicone film is a standalone film at the point of application to an item to be covered, in that it is not then part of a laminated structure. Although it is manufactured on a supporting substrate, it is unsupported when applied, in the sense that it is not bonded or attached to any other layer, such as the substrate, having been separated therefrom. The film is able to function as a three-in-one membrane by virtue of its thickness being limited to a narrow range of values, from 0.15mm to 0.26mm.The food-cooking temperatures are preferably at least those suitable for roasting and baking. Further preferably, the covering is resistant at a temperature of at least 530K.

In a preferred form of the invention, the film comprises silicone rubber.

The film is adapted to be stretchable over a food item or a container in which the food it held. Ideally the film exerts grip on a surface of the container, preferably an external side wall surface, and provides a substantially airtight seal in respect of the contained food.

Further preferably, the harness is in the range Shore A 30-50.

In an embodiment, the film colour is 40% Pantone 376C.

The wrapping may be provided in sheets or in rolls. Examples of sheets sizes that may be provided are 200mmx200mm, 300mm x 300mm and 300mm x 450mm.

In a second aspect of the invention, there is provided a method of inhibiting the deterioration of food, the method comprising the steps of providing food requiring preservation and a covering comprising a substantially transparent silicone film adapted for clinging by having a thickness in the range 0.15 mm to 0.26 mm and hardness on the Shore scale in the range A 25-70, and wrapping the food in the film, thereby to create a substantially airtight barrier around the food.

In a preferred form of the invention, the method includes the step of causing the film to be wrapped on to itself for allowing a cling seal to be established between contacting surfaces thereof.

In a preferred form of the invention, where the food is in a container, the method includes wrapping the film around said container.

In an embodiment, the method includes providing the film adapted to be resistant to deterioration at food roasting and baking temperatures. Preferably, the film is resistant to deterioration at a temperature of at least 530K.

The film preferably comprises silicone rubber, further preferably with a hardness on the Shore scale in the range Shore A 30-50.

In preferred embodiments, the film has a thickness in the range 0.190mm to 0.21mm. Ideally, the thickness is 0.20mm =/-3%.

In a third aspect of the invention, there is provided a method of heating food, the method comprising the steps of providing food requiring heating and a covering comprising a substantially transparent silicone film adapted for clinging and retaining a given wrapped shape, by having a thickness in the range 0.15 mm to 0.26 mm and hardness on the Shore scale in the range Shore A 25-70, covering the food with the film and subjecting the covered food to heat sufficient for achieving baking and cooking.

Preferably, the film is temperature resistant at least to 530K.

In a preferred form of the invention, the covered food is subjected to heat sufficient for cooking. Preferably, the heat is applied for sufficient time to cause the food to bake.

The characteristics of the film are preferably any one or more of those set out above in relation to the other two aspects of this invention.

According to a fourth aspect of the invention, there is provided a food covering consisting of a substantially transparent and wrappable silicone film of at least food grade having a thickness in the range 0.15mm to 0.26mm and hardness on the Shore scale in the range Shore A 25-70, and being resistant to deterioration at temperatures suitable for roasting and baking food.

### Brief description of drawings

In order that the invention may be readily understood, and put into practical effect, reference will now be made to the accompanying figures. Thus:
Figure 1 shows in schematic form a diagram of a preferred embodiment of the wrapping of this invention ready for use in wrapping a food item.
Figure 2 shows the wrapping of Figure 1 with a food item placed upon it.
Figure 3 shows the wrapping of Figure 1 operatively wrapped around the aforesaid food item.

### Detailed description of an embodiment of the invention

The food covering of this invention provides a silicone sheet having a combination of hardness and thickness in a limited range that enables it to render improved performance compared with prior silicone films, without the need for it to be merely a layer in a laminated structure. The improvements render the present film on its own not only suitable to take on and retain a given changed shape, such as when sealingly wrapped about food, but also to be subjected to heating conditions, such as those experienced in the process of roasting or baking, without deterioration, for example deterioration in the form of thermally induced disintegration. The wrap is therefore suitable for reuse and advantageously can be washed. When dry, its surfaces tend to cling to other objects as well as to self-adhere.

The wrapping is re-usable, recyclable and able functionally to replace at once three common single-use items in household use, namely cling film, aluminium foil and baking paper. The covering is composed of a homogeneous, unsupported, sheet of silicone, preferably in the form of silicone rubber. It is unsupported in the sense that it is not bonded or attached to any other layer, such as a substrate at the time of its being applied to an item to be covered. The film functions as a three-in-one wrapping by virtue of its thickness being limited to a narrow range of values from 0.15mm to 0.26mm.

It is found that within the thickness range stipulated below, the film surprisingly exhibits a degree of clinginess and is not effective as a lubricant, as silicone surfaces are recognized to be. When the thickness is above or below the selected range, it is found that contrary to suggestions in the prior art reviewed herein, the desired properties of this invention are not exhibited. Outside the selected range, the role of a backing layer in a laminated structure becomes crucial to the successful functioning of the composite product when being applied in use.

The inventor has found this not to be so in the case of the present film, which allows for any substrate or backing sheet used in manufacture to be removed by peeling it away from the silicone film, before the silicone is applied as a covering or wrapping.

The thickness of the film is in the range from 0.15mm to 0.26mm, preferably 0.190mm to 0.21mm. Ideally, the thickness is 0.20mm =/-3%. Ideally, it is found that the sheet should, for an optimum combination of wrappability, strength and remaining in clinging adhesion once wrapped, be 0.2mm thick.

Wrappability is, without being bound by theory, thought to be a function of hardness and thickness, and adhesion a function of electrostatic properties. If the film is excessively hard, it cannot be bent and moulded to the shape of the item being wrapped. It is found that the film should have a hardness on the Shore scale in the range Shore A 25-70. Further preferably, the hardness should be in the range Shore A 30-50.

The film needs further to be substantially transparent, so as to facilitate an observer seeing what is inside the wrapping. This is particularly advantageous when the wrapped item is being cooked, such as by baking. The film may be coloured for decorative or functional purposes, such as to exclude or filter specific wavelengths of light. A preferred, but non-limiting, example of colour is 40% Pantone 376. Colour also enables a user to differentiate between this reusable film and prior art films not having this advantage, such as conventional, single-use cling-films made of polyethylene. It also reduces the risk that a user may dispose of the film of this invention by accident. It will be appreciated, therefore, that various colours may be used within the scope of this invention, whether for decorative or functional purposes. However, the stated shade is found to be particularly advantageous as it does not correspond to the colour of the vast majority of baked or roasted foods and therefore can easily be detected and removed for re-use.

Since the silicone film is to be used with food and is intended to come into direct contact with food, it is necessarily at least of food quality standard. Manufacture of the film is by methods known in the art, using commercially available liquid silicone and limiting the thickness to the above-stated range. The liquid silicone is applied to a substrate of PET that is formulated to be free of bisphenol A (BPA). Ideally the thickness of the silicone layer, when separated from the substrate layer, is 0.20mm with a 3% tolerance. The silicone layer and substrate are together rolled up onto a roll or cut into discrete sheets to be supplied in standard sheet sizes.

The silicone is separated from the substrate before being applied to the food item or container to be covered. This reduces the risk that would otherwise exist of tearing the silicone film when in the proposed thickness range, were the substrate to be removed only after application of the film. To assist in separation of the silicone film from the substrate without tearing, the film may be pre-scored or have attached a separation tag, according to conventional methods. Without wishing to be bound by theory, it is believed the absence of BPA from the PET substrate helps avoid unwanted crosslinking with the silicone film that may otherwise promote a propensity for the silicone film to be damaged when being separated from the substrate.

A silicone film of thickness in the range 0.15mm to 0.26mm is found thin enough to be readily wrappable about food or over and around the rim of a food container to provide an airtight seal, while conforming to the profile of the item being wrapped. With this thickness, it remains in shape and maintains an airtight seal for weeks under refrigeration, yet it is thick enough to withstand handling and reasonable use as a wrapping film without rupturing or tearing.

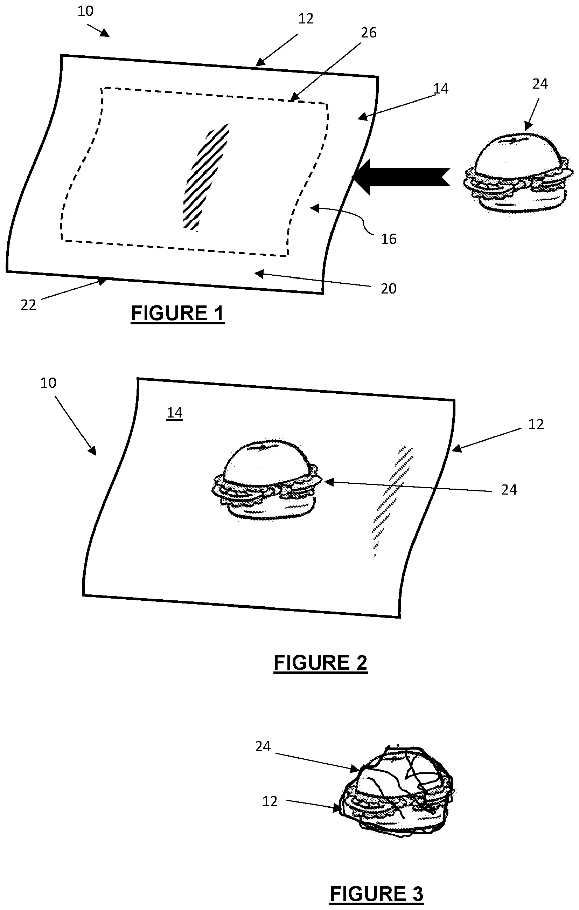

Referring to Figure 1, in a preferred embodiment of this invention, a covering, generally denoted by the number 10, is shown laid out in a generally flat manner, ready for an item of food 24 to be placed upon it for wrapping. Covering 10 comprises a transparent silicone rubber film in the form of a sheet 12, having an upper surface 14 and opposite lower surface 16 which has been peeled away from its BPA-free PET substrate, beginning at a location at peripheral portion 20 which extends inwardly from edge 22 to about the broken line 26. The sheet is 0.20mm thick, having self-adhesive properties, as well as the property that it does not slip from porous and non-porous dry surfaces.

In Figure 2, food item 24 is shown placed on sheet 12 in readiness for wrapping.

In Figure 3, food item 24 is shown wrapped in transparent cling sheet 12.

It will be appreciated that instead of having sheet 12 completely wrapping around a food item such as a bread roll or hamburger, so that is in contact with substantially the entire outer surface, the covering is placed over and wrapped around a container in which the food item is held, for example, an open-topped polystyrene tray. It is not necessary for the covering to adhere to the polystyrene, provided the covering itself is self-adhering when, as in the case of the food item in Figures 1-3, it is wrapped back over itself, so that at least a peripheral portion 20 of lower surface 16 is brought into contact with upper surface 14.

The covering of the invention, in addition to being re-usable, has the advantage of being able to replace at least three commonly used single-use items, namely conventional known cling film, aluminium foil and baking paper, providing the user with effective three-in-one product functionality. The specific thickness range found by the present inventor was not previously known to provide the benefits realised by way of the present invention. Prior proposals simply to use a silicone film in a generic form have not been practical, failing to achieve the advantages of the present invention. The silicone film of thickness in the range 0.15mm to 0.26mm is found to be thin enough to be readily wrappable about food or over and around the rim of a container to provide an airtight seal while conforming to the profile of the item being wrapped, remaining in shape practically indefinitely, and is still found to be thick enough to withstand handling and reasonable use as a wrapping film without a propensity to rupture or tear.

These embodiments merely illustrate examples of the method and covering of the invention providing a multifunctional silicone film. With the insight gained from this disclosure, the person skilled in the art is well placed to discern further embodiments by means of which to put the claimed invention into practice.

## Claims

1. A food covering comprising a silicone film of at least food grade, adapted for clinging, for resistance to deterioration at temperatures suitable for roasting and baking food and substantially transparent, **characterised by** having a thickness in the range 0.15mm to 0.26mm and hardness on the Shore scale in the range Shore A 25-70.

2. The food covering of claim 1 being resistant to deterioration at a temperature of at least 530K.

3. The covering of claim 1 or claim 2 wherein the film comprises silicone rubber.

4. The covering any one of the preceding claims wherein the film has a thickness in the range 0.19mm to 0.21mm.

5. The covering of any one of the preceding claims, wherein the film has a hardness on the Shore scale in the range Shore A 30-50.

6. The covering of any one of the preceding claims, wherein the film is distinguishable from single use films by colouring.

7. A method of inhibiting food deterioration, the method comprising the steps of providing food requiring preservation and a covering comprising a substantially transparent silicone film adapted for clinging by having a thickness in the range 0.15mm to 0.26mm and hardness on the Shore scale in the range Shore A 25-70, and wrapping the food in the film, thereby to create by means of the film a substantially airtight barrier around the food.

8. The method of claim 7 including the step of causing the film to be wrapped on to itself for allowing a cling seal to be established between contacting surfaces thereof.

9. The method of claim 7 or claim 8 comprising providing the film on a substrate and removing the film from the substrate prior to application to an item to be wrapped.

10. The method of any one of claims 8 to 9 wherein the film comprises silicone rubber.

11. The method of any one of claims 7 to 10 wherein the film has a thickness in the range 0.19mm to 0.21mm.

12. A method of heating food, the method comprising the steps of providing food requiring heating and a wrapping that is temperature resistant to a temperature suitable for food roasting or baking, the wrapping comprising a substantially transparent silicone film adapted for clinging and retaining a given wrapped shape, by having a thickness in the range 0.15mm to 0.26mm and hardness on the Shore scale in the range Shore A 25-70, wrapping the food in the wrapping and subjecting the wrapped food to effective roasting or baking heat.

13. The method of claim 12 wherein the film comprises silicone rubber.

14. The method of claim 12 or claim 13, wherein the film has a thickness in the range 0.19mm to 0.21mm.

15. A food covering consisting of a substantially transparent and wrappable silicone film of at least food grade, the film being resistant to deterioration at tempeatures suitable for roasting and baking food, and **characterised by** having a thickness in the range 0.15mm to 0.26mm and hardness on the Shore scale in the range Shore A 25-70; optionally wherein the film is resistant to thermal deterioration at a temperature of at least 530K; and/or wherein the film has a thickness in the range 0.19mm to 0.21mm.

## Patentansprüche

1. Lebensmittelabdeckung, die eine Silikonfolie von mindestens Lebensmittelqualität umfasst, die zum Anhaften geeignet ist, bei Temperaturen, die zum Braten und Backen von Lebensmitteln geeignet sind, widerstandsfähig gegen Verderben ist und im Wesentlichen transparent ist, **dadurch gekennzeichnet, dass** sie eine Dicke im Bereich von 0,15 mm bis 0,26 mm und eine Härte auf der Shore-Skala im Bereich von Shore A 25-70 aufweist.

2. Lebensmittelabdeckung nach Anspruch 1, die bei einer Temperatur von mindestens 530 K widerstandsfähig gegen Beschädigung ist.

3. Abdeckung nach Anspruch 1 oder Anspruch 2, wobei die Folie Silikonkautschuk umfasst.

4. Abdeckung nach einem der vorhergehenden Ansprüche, wobei die Folie eine Dicke im Bereich von 0,19 mm bis 0,21 mm aufweist.

5. Abdeckung nach einem der vorhergehenden Ansprüche, wobei die Folie eine Härte auf der Shore-Skala im Bereich von Shore A 30-50 aufweist.

6. Abdeckung nach einem der vorhergehenden Ansprüche, wobei die Folie durch Färbung von Einwegfolien unterscheidbar ist.

7. Verfahren zum Verhindern des Verderbens von Lebensmitteln, wobei das Verfahren die folgenden Schritte umfasst: Bereitstellen von Lebensmitteln, die konserviert werden müssen, und einer Abdeckung, die eine im Wesentlichen transparente Silikonfolie umfasst, die zum Anhaften geeignet ist, indem sie eine Dicke im Bereich von 0,15 mm bis 0,26 mm und eine Härte auf der Shore-Skala im Bereich von Shore A 25-70 aufweist, und Einpacken des Lebensmittels mit der Folie, um dadurch mit Hilfe der Folie eine im Wesentlichen luftdichte Barriere um das Lebensmittel herum zu bilden.

8. Verfahren nach Anspruch 7, das den Schritt einschließt, die Folie auf sich selbst zu wickeln, um eine Anhaftversiegelung zwischen ihren sich berührenden Oberflächen zu ermöglichen.

9. Verfahren nach Anspruch 7 oder 8, bei dem die Folie auf einem Substrat bereitgestellt und vor der Anwendung auf den zu verpackenden Gegenstand vom Substrat entfernt wird.

10. Verfahren nach einem der Ansprüche 8 bis 9, wobei die Folie Silikonkautschuk umfasst.

11. Verfahren nach einem der Ansprüche 7 bis 10, wobei die Folie eine Dicke im Bereich von 0,19 mm bis 0,21 mm aufweist.

12. Verfahren zum Erhitzen von Lebensmitteln, wobei das Verfahren die folgenden Schritte umfasst: Bereitstellen von Lebensmitteln, die erhitzt werden müssen, und einer Verpackung, die bis zu einer zum Braten oder Backen von Lebensmitteln geeigneten Temperatur temperaturbeständig ist, wobei die Umhüllung eine im Wesentlichen transparente Silikonfolie umfasst, die so beschaffen ist, anzuhaften und eine gegebene Verpackungsform beizubehalten, indem sie eine Dicke im Bereich von 0,15 mm bis 0,26 mm und eine Härte auf der Shore-Skala im Bereich von Shore A 25-70 aufweist, Verpacken des Lebensmittels mit der Verpackung und Aussetzen des verpackten Lebensmittels einer wirksamen Brat- oder Backwärme.

13. Verfahren nach Anspruch 12, wobei die Folie Silikonkautschuk umfasst.

14. Verfahren nach Anspruch 12 oder 13, wobei die Folie eine Dicke im Bereich von 0,19 mm bis 0,21 mm aufweist.

15. Lebensmittelabdeckung, bestehend aus einer im wesentlichen transparenten und verpackbaren Silikonfolie von mindestens Lebensmittelqualität, wobei die Folie bei Temperaturen, die zum Braten und Backen von Lebensmitteln geeignet sind, beständig ist und **dadurch gekennzeichnet ist, dass** sie eine Dicke im Bereich von 0,15 mm bis 0,26 mm und eine Härte auf der Shore-Skala im Bereich von Shore A 25-70 aufweist; wobei die Folie optional bei einer Temperatur von mindestens 530 K beständig gegen thermische Beschädigung ist; und/oder wobei die Folie eine Dicke im Bereich von 0,19 mm bis 0,21 mm aufweist.

## Revendications

1. Revêtement alimentaire comprenant un film de silicone au moins de qualité alimentaire, apte à adhérer, destiné à résister à une détérioration à des températures appropriées pour rôtir et cuire des aliments et sensiblement transparent, **caractérisé en ce qu'**il présente une épaisseur dans la plage de 0,15 mm à 0,26 mm et une dureté sur l'échelle Shore dans la plage Shore A de 25 à 70.

2. Revêtement alimentaire selon la revendication 1, étant résistant à une détérioration à une température d'au moins 530 K.

3. Revêtement selon la revendication 1 ou 2, dans lequel le film comprend du caoutchouc de silicone.

4. Revêtement selon l'une quelconque des revendications précédentes, dans lequel le film présente une épaisseur dans la plage de 0,19 mm à 0,21 mm.

5. Revêtement selon l'une quelconque des revendications, dans lequel le film présente une dureté sur l'échelle Shore dans la plage Shore A de 30 à 50.

6. Revêtement selon l'une quelconque des revendications, dans lequel le film se distingue de films à usage unique par sa coloration.

7. Procédé pour empêcher toute détérioration d'aliment, le procédé comprenant les étapes consistant à fournir un aliment à préserver et un revêtement comprenant un film de silicone sensiblement transparent apte à adhérer présentant une épaisseur dans la plage de 0,15 mm à 0,26 mm et une dureté sur l'échelle Shore dans la plage Shore A de 25 à 70, et envelopper l'aliment dans le film, pour créer de ce fait, à l'aide du film, une barrière sensiblement étanche à l'air autour de l'aliment.

8. Procédé selon la revendication 7, incluant l'étape consistant à amener le film à être enveloppé sur lui-même pour permettre d'établir un scellement adhésif entre des surfaces de celui-ci en contact l'une avec l'autre.

9. Procédé selon la revendication 7 ou 8, comprenant la fourniture du film sur un substrat et le retrait du film du substrat avant l'application d'un élément à envelopper.

10. Procédé selon la revendication 8 ou 9, dans lequel le film comprend du caoutchouc de silicone.

11. Procédé selon l'une quelconque des revendications 7 à 10, dans lequel le film présente une épaisseur dans la plage de 0,19 mm à 0,21 mm.

12. Procédé de chauffage d'aliment, le procédé comprenant les étapes consistant à fournir un aliment à chauffer et un emballage thermorésistant à une température appropriée pour rôtir ou cuire l'aliment, l'emballage comprenant un film de silicone sensiblement transparent apte à adhérer et à conserver une forme enveloppée donnée, présentant une épaisseur dans la plage de 0,15 mm à 0,26 mm et une dureté sur l'échelle Shore dans la plage Shore A de 25 à 70, envelopper l'aliment dans l'emballage et soumettre l'aliment enveloppé à une chaleur efficace de rôtissage ou de cuisson.

13. Procédé selon la revendication 12, dans lequel le film comprend du caoutchouc de silicone.

14. Procédé selon la revendication 12 ou 13, dans lequel le film présente une épaisseur dans la plage de 0,19 mm à 0,21 mm.

15. Revêtement alimentaire se composant d'un film de silicone sensiblement transparent pouvant être enveloppé au moins de qualité alimentaire, le film étant résistant à une détérioration à des températures appropriées pour rôtir et cuire des aliments, et **caractérisé en ce qu'**il présente une épaisseur dans la plage de 0,15 mm à 0,26 mm et une dureté sur l'échelle Shore dans la plage Shore A de 25 à 70 ; facultativement dans lequel le film est résistant à une détérioration thermique à des températures d'au moins 530 K ; et/ou dans lequel le film présente une épaisseur dans la plage de 0,19 mm à 0,21 mm.
